# EUROPÄISCHE PATENTSCHRIFT

(11) **EP 2 140 158 B1**
(45) Veröffentlichungstag und Bekanntmachung des Hinweises auf die Patenterteilung: **13.08.2014**
(21) Anmeldenummer: 08709107.0
(22) Anmeldetag: 19.02.2008
(51) Int. Cl.: F16C 33/30, F16C 41/00, F16D 65/14, F16M 11/00

(54) **WÄLZLAGER MIT EINER BREMSEINRICHTUNG**
ROLLING BEARING HAVING A BRAKING DEVICE
PALIER À ROULEMENT AVEC UN DISPOSITIF DE FREINAGE

(30) Priorität: 20.03.2007 DE 102007013164
(43) Veröffentlichungstag der Anmeldung: 06.01.2010
(73) Patentinhaber: Schaeffler Technologies GmbH & Co. KG, 91074 Herzogenaurach (DE)
(72) Erfinder: NUISSL, Christian, 90439 Nürnberg (DE); STÖLZLE, Jürgen, 91056 Erlangen (DE)
(86) Internationale Anmeldenummer: PCT/EP2008/052016
(87) Internationale Veröffentlichungsnummer: WO 2008/113656

(56) Entgegenhaltungen:
- EP-A- 0 222 312
- DE-A1- 10 127 487
- JP-A- 2003 235 274

## Beschreibung

### Gebiet der Erfindung

Die Erfindung betrifft ein Wälzlager mit einer Bremseinrichtung, insbesondere Drehverbindung, bestehend aus einem Lageraußenring und einem Lagerinnenring, zwischen denen auf zugehörigen Laufbahnen Wälzkörper abrollen, wobei zur Erzeugung einer Bremswirkung durch Reibschluss ein mit einem der Lagerringe verbundenes verschiebbares Bremselement, gegen eine mit dem zugehörigen anderen Lagerring verbundene Gegenfläche gepresst ist und der Reibschluss mit Hilfe eines Elektromagneten aufhebbar ist.

### Hintergrund der Erfindung

Wälzlager mit Bremseinrichtungen sind bereits seit längerem bekannt. So besteht bei Wälzlagerdrehverbindungen an Windkraftanlagen die Gefahr, dass sie nach relativ kurzer Zeit durch Riffelbildung in den Laufbahnen ausfallen. Dieses Phänomen wird insbesondere durch geringe Schwenkbewegungen zum Ausgleich der Windrichtung erzeugt, bei der es zu einem Gleiten der Wälzkörper auf der Laufbahn kommt. Um diesen Verschleiß auszuschalten, ist es bekannt, durch verschiedene Maßnahmen den geringen Drehwiderstand bei Wälzlagern zu erhöhen. Die DE 37 25 972 A1 und die DE 41 04 137 A1 schlagen in diesem Zusammenhang vor, eine zusätzlich umlaufende Bremseinrichtung einzusetzen. Die Bremskraft und somit der gewünschte Drehwiderstand kann dann von außen eingestellt werden. Nachteilig dabei ist, dass im ersten Fall das Bremselement nur bei Stilllegung der Windkraftanlage aufgehoben werden kann. Im zweiten Fall besteht die Bremseinrichtung aus vielen mechanischen Einzelteilen und ist dadurch aufwändig zu fertigen und kompliziert in der Handhabung.

Aus der DE 19 04 954 B ist eine drehzapfenlose Drehverbindung für Bagger, Krane oder dergleichen zur Lagerung eines schwenkbaren Oberbaus auf einem Unterbau bekannt. Diese Drehverbindung bestehen jeweils aus einem einteiligen Drehring sowie einem zweiteiligen, aus zwei Profilringen zusammengesetzten weiteren Drehring. Die beiden Drehringe sind jeweils durch die Kugeln eines zweireihigen Kugellagers gegeneinander abgestützt und mit einer Bremsvorrichtung ausgerüstet. Die Bremsvorrichtungen weisen jeweils einen oder mehrere Bremsklotzträger auf, die an einem mit dem einteiligen Drehring in Verbindung stehenden Bauteil befestigt sind. Bei dieser Anordnung ist von Nachteil, dass die Bremsvorrichtungen außerhalb der eigentlichen Lageranordnung angeordnet sind und daher zusätzlichen Bauraum beanspruchen.

Eine gattungsgemäße Lageranordnung mit Bremsfunktion ist aus der DE 101 27 487 A1 vorbekannt. Die Radiallageranordnung gemäß Figur 1 weist ein als Radiallager ausgebildetes Rillenkugellager auf und eine axial daneben angeordnete Bremseinrichtung. Das Rillenkugellager besteht aus dem Innenring, dem Außenring und zwischen beiden in einem Käfig angeordneten Lagerkugeln. Weiterhin verfügt das Rillenkugellager über zwei Dichtringe, die den Ringraum beidseitig gegen die Umgebung abdichten. Die Bremseinrichtung weist einen inneren Haltering und äußeren Haltering auf. An einem radial nach außen gerichteten Flansch des inneren Halteringes ist über eine Flachdrahtfeder eine Bremsscheibe befestigt, die aus einem ferromagnetischen Material besteht und auf ihrer vom Flansch abgewandten Seite einen Bremsbelag besitzt. Durch die Befestigung mittels der Flachdrahtfeder ist die Bremsscheibe drehfest mit dem inneren Haltering verbunden und in Axialrichtung verschiebbar. Gegenüber dem Bremsbelag ist am äußeren Haltering eine Gegenfläche ausgebildet, gegen die der Bremsbelag beim Bremsen gepresst wird. Der äußere Haltering weist weiterhin eine elektrische Spule und einen oder mehrere Permanentmagneten auf, die jeweils im Bereich zwischen der Bremsscheibe und dem Rillenkugellager angeordnet und mechanisch mit dem äußeren Haltering und somit auch mit der Gegenfläche verbunden sind.

Nachteilig dabei ist, dass die Bremseinrichtung in axialer Richtung als externes Teil an das Lager angeflanscht werden muss und daher zusätzlichen Bauraum beansprucht. Die Halteringe sind relativ kompliziert aufgebaut und müssen erst in aufwendiger Weise durch Stifte mit den Lagerringen verbunden werden. Ein weiterer Nachteil ist dadurch begründet, dass die Bremswirkung durch einen Permanentmagneten ausgelöst wird, der die Bremsscheibe anzieht. Bei bestimmten Anwendungsfällen ist aber ein stetiges Magnetfeld nachteilig, da unter Umständen eisenhaltiger Schmutz vom Lager angezogen wird.

### Zusammenfassung der Erfindung

Der Erfindung liegt daher die Aufgabe zugrunde, die genannten Nachteile zu vermeiden und eine einfach zu fertigende Bremsvorrichtung bereitzustellen, die einen minimalen Bauraum beansprucht.

Erfindungsgemäß wird diese Aufgabe nach dem kennzeichnenden Teil von Anspruch 1 in Verbindung mit dessen Oberbegriff dadurch gelöst, dass alle Elemente der Bremseinrichtung als integraler Bestandteil des Wälzlagers innerhalb der beiden Lagerringe angeordnet sind, wobei das Bremselement eine ferromagnetische Ankerplatte umfasst, die an einem Lagerring axial verschiebbar gehalten ist, wobei der Elektromagnet durch den gleichen Lagering als Weicheisenkern sowie durch eine darin in einer in axialer Richtung offenen Ausnehmung angeordneten Spule gebildet ist, und wobei die Gegenfläche an einer an dem anderen Lagering befestigten Druckplatte angeordnet ist.

Auf diese Weise ist eine Lageranordnung mit Bremseinrichtung geschaffen, bei der die Bremseinrichtung nahezu keinen zusätzlichen Bauraum benötigt, da sie integraler Bestandteil des Lagers ist. Durch Unterbringen des Bremselementes in einem der Lagerringe, im Normalfall im sich drehenden Lagerring, wird es auf diese Weise möglich, dass Wälzlager mit Bremseinrichtung raumsparend zu realisieren. Ein weiterer Vorteil liegt darin, dass durch die Anordnung der Bremseinrichtung als integraler Wälzlagerbestandteil diese nicht in zusätzlicher und aufwändiger Weise mit der eigentlichen Lageranordnung zu verbinden ist. Es ist auch von Vorteil, dass durch den Einsatz unterschiedlich dimensionierter Federn in einfacher Weise auf die Größe der Vorspannkraft und damit auf die aufzubringende Bremskraft eingewirkt werden kann. Auch kann durch den Einsatz des Elektromagneten die Bremskraft problemlos aufgehoben werden, sodass in diesem Fall das Wälzlager leichtgängig bewegt werden kann. Ein derart gattungsgemäß ausgebildetes Wälzlager mit Bremseinrichtung lässt sich immer besonders dann vorteilhaft einsetzen, wenn ein stetig vorhandenes Reibmoment erwünscht ist, aber auch unter bestimmten Umständen sehr schnell ein Lösen dieses Reibmoments erzielt werden muss. Dies ist beispielsweise im medizinischen Bereich der Fall, wenn die Wälzlageranordnung in einer Drehverbindung eingesetzt wird, beispielsweise in einem Deckenstativ, das mit unterschiedlich ausgestalteten medizinischen Geräten verbunden ist. Dabei ist von Vorteil, dass durch das stetig vorhandene Reibmoment ein unerwünschtes Verdrehen der Drehverbindung einerseits unterbunden wird, andererseits die Drehverbindung aber durch Lösen der Bremseinrichtung leicht verstellbar ist. Im Notfall, wenn ein sofortiges Verdrehen beider Ringe gegeneinander erforderlich ist, muss dies auch mit wirkender Bremseinrichtung möglich sein. Vorteilhafterweise ist dabei die Bremskraft so einzustellen, dass eine Verdrehung der beiden Lagerringe gegeneinander durch menschliche Muskelkraft noch möglich ist.

Vorteilhafte Ausgestaltungen der Erfindung sind in den Unteransprüchen beschrieben.

So ist nach Anspruch 2 vorgesehen, dass das Bremselement und der Elektromagnet vorzugsweise vom inneren, den Weicheisenkern bildenden Lagerring und die Gegenfläche vorzugsweise vom äußeren, mit der Druckplatte verbundenen Lagerring aufgenommen sind.

Bei der Montage der Lagereinheit wird zunächst die Druckplatte in die axiale Stellung gebracht, die dem gewünschten Luftspalt entspricht. Danach wird die Druckplatte in der gewünschten Stellung zum Lagerring fixiert. Die Verbindung erfolgt vorzugsweise dadurch, dass die Druckplatte kreisringartig ausgebildet und über ein Gewinde von einem zugehörigen Gewinde des Lagerringes aufgenommen ist. Durch diese beiden Maßnahmen ist es in einfacher Weise möglich, den Luftspalt des Elektromagneten zur Aufhebung der Bremskraft sehr genau einzustellen. Ist der Luftspalt zu gering eingestellt, so besteht die Gefahr, dass die Bremswirkung nicht aufgehoben wird, da der Bremsbelag nicht abhebt. Ist der Luftspalt zu groß, so wird das Magnetfeld geschwächt und der Elektromagnet muss unnötig groß ausgelegt werden.

Nach einem weiteren zusätzlichen Merkmal ist vorgesehen, dass das Bremselement aus einer mit einem Bremsbelag verbundenen ferro-magnetischen Ankerplatte besteht, die im Lagerring über mehrere in Umfangsrichtung voneinander beabstandete Führungsstifte axial verschiebbar gehalten ist.

Gemäß Anspruch 5 sind mehrere in Umfangsrichtung voneinander beabstandete Federelemente mit einer Vorspannung beaufschlagt, wobei im stromlosen Zustand der Spule zwischen der Ankerplatte und dem Lagerring ein Luftspalt gebildet ist. Auf diese Weise sind die Bremswirkung auslösenden Mittel, nämlich die Federelemente, und die die Bremswirkung aufhebenden Mittel, nämlich die Spulenwicklungen, unmittelbar benachbart im Lagerring angeordnet, sodass der vorhandene Bauraum maximal ausgelastet ist.

Nach einem anderen zusätzlichen Merkmal gemäß Anspruch 6 ist vorgesehen, dass die Wälzkörper durch Lagernadeln zweier zueinander in ⊙ - Anordnung angestellter Axialschrägnadellager gebildet sind, wobei ein Schnittpunkt von deren verlängerter Drehachsen im Lagerinnenring liegt. Gegenüber den bekannten Drehverbindungen, die bevorzugt als Vierpunktlager oder als Kreuzrollenlager ausgeführt sind, ist bei Verwendung von zwei Axialschrägnadellagern bei gleicher oder höherer Tragzahl die Fertigung wesentlich kostengünstiger. Die Laufscheiben können dann nach einem weiteren Merkmal der Erfindung gemäß Anspruch 7 einem Härteprozess unterworfen werden, wobei es sich als nach Anspruch 8 als vorteilhaft erwiesen hat, dass Laufscheiben und einer der Lagerringe aus unterschiedlichen Werkstoffen bestehen können, sodass nochmals eine Gewichtsreduzierung der genannten Lageranordnung realisierbar ist. Vorteilhaft ist es in diesem Fall nach Anspruch 9, wenn der spulenlose Lagerring aus einem Leichtmetall oder aus einem Kunststoff gefertigt ist, der die wesentlich härteren Laufscheiben der Axialschrägnadellager aufnimmt.

Nach einem anderen zusätzlichen Merkmal zur Einstellung der Lagervorspannung ist nach Anspruch 10 vorgesehen, dass der Lagerring zweiteilig ausgebildet ist, wobei dieser mit einer in axialer Richtung verschiebbaren Stellmutter verbunden ist. Dabei hat es sich nach einem weiteren Merkmal gemäß Anspruch 11 als vorteilhaft erwiesen, wenn die Stellmutter über ein Gewinde von einem entsprechenden Gegengewinde des Lagerringes aufgenommen ist.

Schließlich soll nach einem letzten Merkmal der Erfindung das Wälzlager in einem Deckenstativ für medizinische Geräte einsetzbar sein. Derartige Deckenstative sind schon seit längerem bekannt und werden beispielsweise in der DE 36 27 517 A1, DE 43 06 803 A1 und DE 199 63 512 C1 beschrieben. Das in der letzten Vorveröffentlichung beschriebene Deckenstativ ist auch mit einer Bremseinrichtung versehen, die aus zwei Bremsringen besteht, welche die Lageranordnung radial von außen umschließen. Auch hier ist die Bremseinrichtung als zusätzlich zu fertigendes und außerhalb der eigentlichen Lagerung anzuordnendes Bauteil dargestellt, welches wiederum die im Stand der Technik aufgeführten Nachteile beinhaltet.

Weitere Merkmale der Erfindung ergeben sich aus der nachfolgenden Beschreibung und aus den Zeichnungen, in denen Ausführungsbeispiele der Erfindung in vereinfachter Form dargestellt sind.

### Kurze Beschreibung der Zeichnungen

Es zeigen:
- Figur 1: einen Längsschnitt durch ein erfindungsgemäß ausgestaltetes Wälzlager entlang der Linie I-I in Figur 2,
- Figur 1a: einen vergrößerten Ausschnitt des Lagers im Bereich der Wälzkörper,
- Figur 2: eine Seitenansicht dieses Lagers,
- Figur 3: einen Längsschnitt durch ein Wälzlager entsprechend einer zweiten Erfindungsvariante und
- Figur 4: ein erfindungsgemäßes Wälzlager mit Darstellung des magnetischen Kraftflusses.

### Ausführliche Beschreibung der Zeichnungen

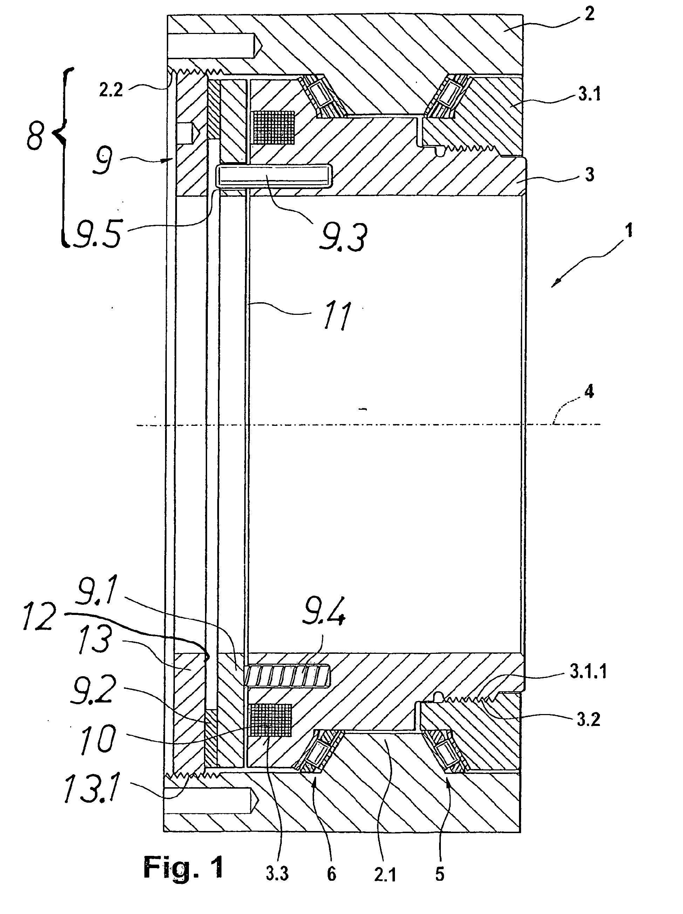

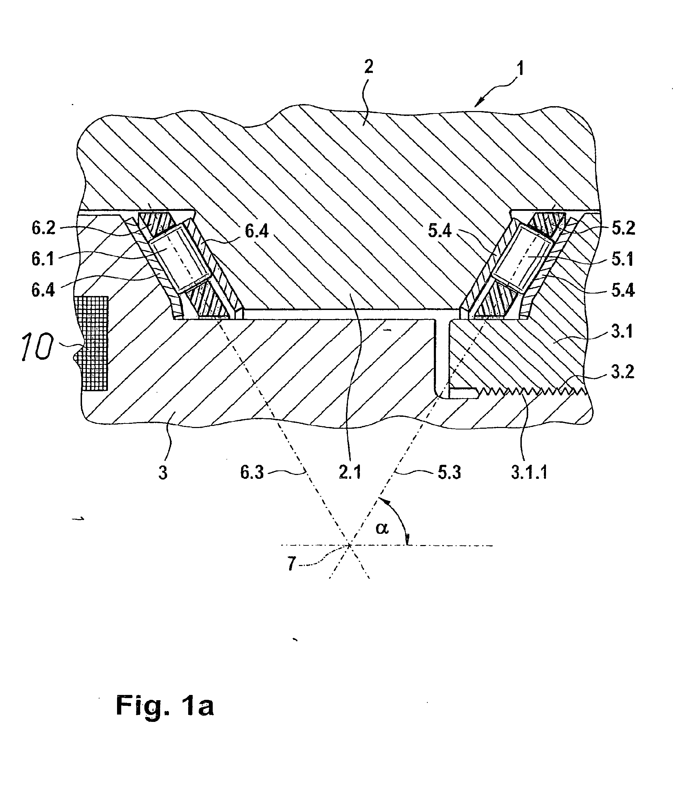

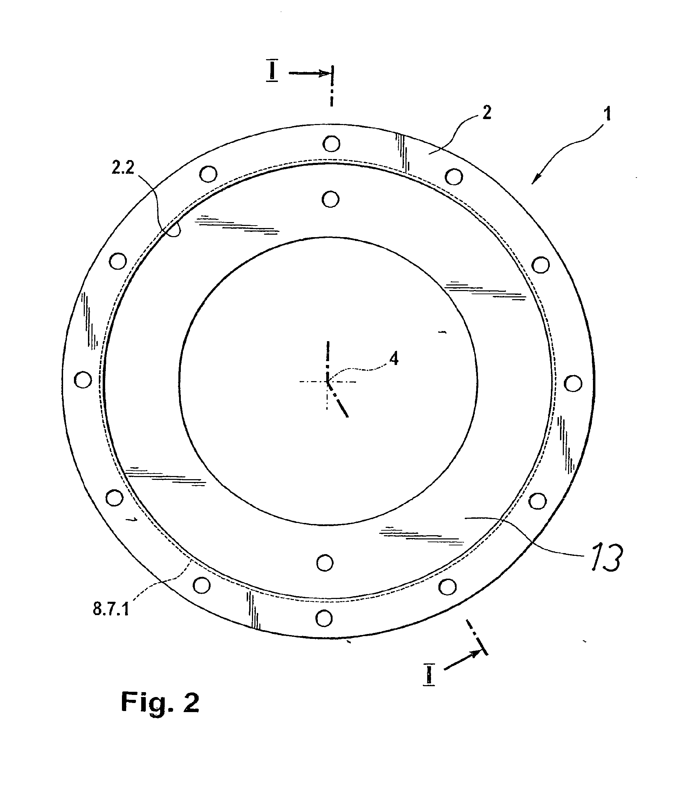

Das in den Figuren 1, 1a und 2 gezeigte erfindungsgemäß ausgestaltete Wälzlager 1 besteht aus dem Lageraußenring 2 und dem Lagerinnenring 3, die konzentrisch um die Lagerachse 4 ineinander angeordnet sind. Im zwischen beiden gebildeten Ringraum sind Axialschrägnadellager 5, 6 angeordnet, die zueinander in O-Anordnung angestellt sind. Beide weisen Wälzkörper in Form von Lagernadeln 5.1, 6.1 aus, die in je einem Käfig 5.2, 6.2 geführt sind, wobei sich die verlängerten Drehachsen 5.3, 6.3 der Lagernadeln 5.1, 6.2 im Punkt 7 schneiden, der im Lagerinnenring 3 liegt. Zu den Axialschrägnadellagern 5, 6 gehören jeweils zwei Laufscheiben 5.4, 6.4, die die nicht näher bezeichneten Laufbahnen für die Lagernadeln 5.1, 6.1 stellen. Insbesondere die Figur 1a lässt erkennen, dass der Neigungswinkel α veränderbar sein kann und somit das Verhältnis von radialer und axialer Kraftaufnahme beeinflusst werden kann. Wie auch ersichtlich, ist der Lagerinnenring 3 zweiteilig ausgebildet, wobei die Stellmutter 3.1 mit ihrem Innengewinde 3.1.1 auf das Außengewinde 3.2 des Lagerinnenrings 3 aufgeschraubt und damit in axialer Richtung verschiebbar ist. Auf diese Weise kann die Lagervorspannung in einfacher Weise durch Anziehen der Stellmutter 3.1 eingestellt werden, wobei die beiden Axialschrägnadellager 5, 6 gegen den V-förmigen Vorsprung 2.1 des Lageraußenringes 2 gepresst werden.

Das erfindungsgemäße Bremselement 9 besteht aus der ferromagnetischen Ankerplatte 9.1, die kreisringartig ausgebildet ist und an ihrer nach außen weisenden Stirnseite mit dem Bremsbelag 9.2 versehen ist. Die andere Stirnseite der Ankerplatte 9.1 liegt an der Stirnseite des Lagerinnenrings 3 an und ist mit dieser über Führungsstifte 9.3 verbunden. Dabei sind im Lagerinnenring 3 in Umfangsrichtung mehrere voneinander beabstandete Führungsstifte 9.3 fest positioniert. Diese Führungsstifte 9.3 greifen in zugehörige Bohrungen 9.5 der Ankerplatte 9.1 ein, wobei die Bohrungen 9.5 im Durchmesser etwas größer als die Durchmesser der Führungsstifte 9.3. sind. Auf diese Weise ist sichergestellt, dass die Ankerplatte 9.1 im Lagerinnenring 3 axial verschiebbar gehalten ist, wobei diese durch gleichmäßig in Umfangsrichtung voneinander beabstandete Federelemente 9.4 unter Vorspannung gesetzt ist.

Wie weiter erkennbar ist der Lagerinnenring 3 mit einer in axialer Richtung offenen Ausnehmung 3.3 versehen, in der die Spule 10 angeordnet ist. Zum Bremselement 9 gehört weiter die Druckplatte 13, die mit ihrem Außengewinde 13.1 im Lageraußenring 2 über dessen Innengewinde 2.2 aufgenommen ist. Auf diese Weise ist es möglich, durch eine unterschiedliche axiale Stellung der Druckplatte 13 im Lageraußenring 2 den Luftspalt 11 genau zu justieren. Nach Einstellung des Luftspaltes 11 hat es sich als vorteilhaft erwiesen, die Druckplatte 13 gegen ein unbeabsichtigtes Verschieben zu sichern. Auf diese Weise sind der Lagerinnenring 3 und der Lageraußenring 2 kraftschlüssig über den Bremsbelag 9.2 verbunden. Dieser Reibschluss ist über zwei Parameter definiert, nämlich über den Reibwert µ des Bremsbelages und die Vorspannkraft F, wobei diese Vorspannkraft F durch die Federelemente 9.4 vorgegeben ist. Im stromlosen Zustand der Spule 10 ist die Lageranordnung gebremst, d. h. der Lageraußenring 2 und der Lagerinnenring 3 sind reibschlüssig miteinander verbunden, da die mit dem Lagerinnenring 3 verbundene Ankerplatte 9.1 über ihrem Reibbelag 9.2 durch die Federelemente 9.4 gegen die Druckplatte 13 gepresst wird, welche wiederum mit dem Lageraußenring 2 verbunden ist. Bei Stromfluss durch die Spule 10 wird durch das erzeugte Magnetfeld die Ankerplatte 9.1 in Richtung der Stirnseite des Lagerinnenrings 3 bewegt, sodass diese fest anliegt und der Luftspalt 11 verschwunden ist.

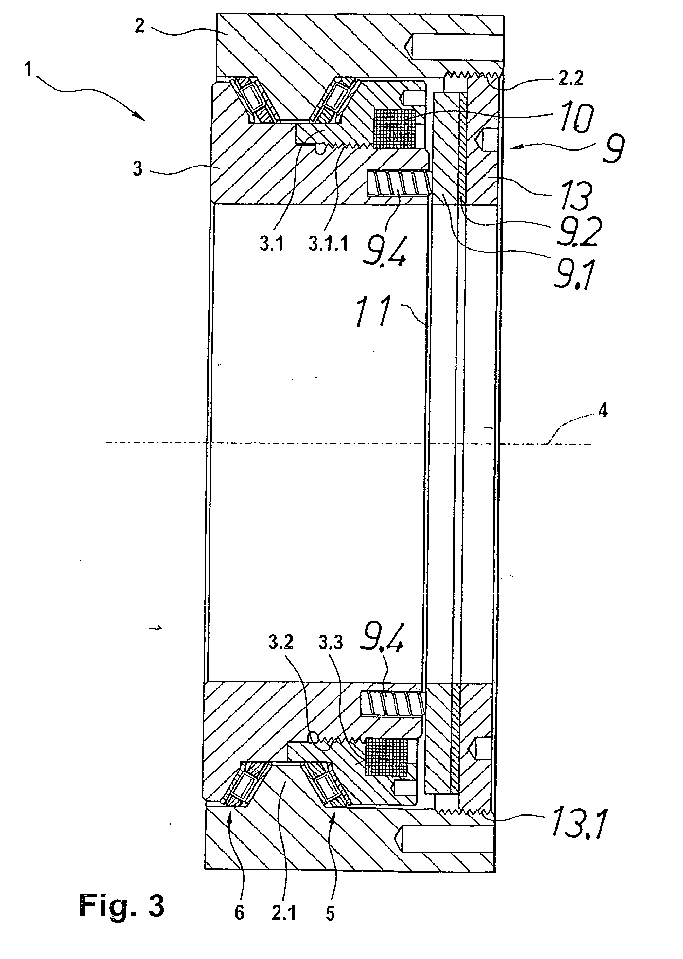

Die in Figur 3 dargestellte zweite Ausführungsvariante unterscheidet sich von der in Figur 1 lediglich dadurch, dass die Spule 10 nicht an der Stirnseite des Lagerinnenrings 3, sondern an der Stirnseite der Stellmutter 3.1 angeordnet ist.

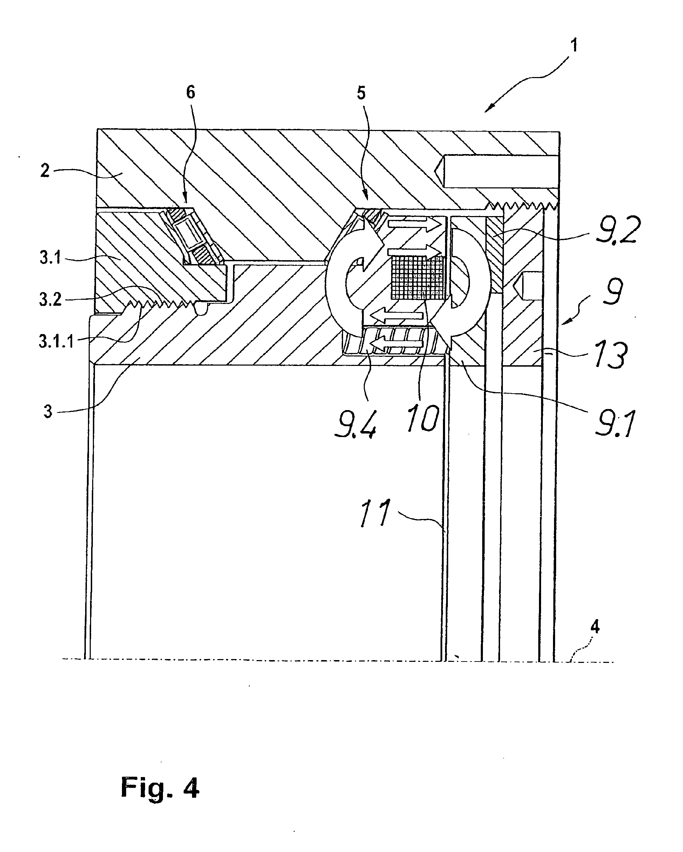

In Figur 4 ist eine weitere erfindungsgemäße Variante eines Wälzlagers 1 mit einer Bremseinrichtung 8 gezeigt, auf deren Erläuterung jedoch an dieser Stelle verzichtet werden kann, da prinzipiell derselbe Aufbau wie bei den vorangegangenen und bereits beschriebenen Figuren verwirklicht ist. Aus diesem Grunde sind auch hier wiederum für gleiche Teile gleiche Bezugszeichen verwendet worden. Wie auch vorstehend beschrieben, besteht der Elektromagnet aus der Spule 10, um die sich bei Stromdurchfluss ein magnetisches Feld bildet. Dieses magnetische Feld ist durch die Pfeile dargestellt, wobei das Magnetfeld durch den als Eisenkern wirkenden Lagerinnenring 3 verstärkt ist. Wird die Spule 10 von Strom durchflossen, so wird die Ankerplatte 9.1, die aus einem ferromagnetischen Material besteht, von der Spule 10 angezogen, sodass der vorhandene Luftspalt 11, der im stromlosen Zustand zwischen Spule 10 und Ankerplatte 9.1 vorhanden ist, geschlossen ist. Stattdessen bildet sich ein Spalt in gleicher axialen Ausdehnung zwischen der Ankerplatte 9.1 und dem Bremsbelag 9.2, der mit der Druckplatte 13 verbunden ist. Wie der Fachmann weiß, ist die erzeugte magnetische Feldstärke von der Länge der Spule und deren Windungszahl sowie vom Strom abhängig, der durch die Spule fliest. Darüber hinaus ist die magnetische Flussdichte auch vom Luftspalt 11 abhängig, der so klein wie möglich sein sollte, sodass dieser exakt einstellbar sein muss, was durch die vorliegende Erfindung problemlos möglich ist.

In Hinblick auf die Anordnung des Bremselementes 9 als integraler Bestandteil des rotierenden Lagerinnenrings 3 oder der Stellmutter 3.1 in den Ausführungsbeispielen wird an dieser Stelle nochmals darauf hingewiesen, dass es sich lediglich um schematische Darstellungen zur Veranschaulichung des prinzipiellen Aufbaus der Erfindung handelt. Das Bremselement 9 kann ebenso als integraler Bestandteil des Lageraußenringes 2 vorhanden sein. Für jeden konkreten Anwendungsfall sind die einzelnen Lagerbestandteile einschließlich Bremseinrichtung 8 im Hinblick auf ihre Ausgestaltung und Materialauswahl sowie im Hinblick auf die Ausbildung und Wirkung der Magnetfelder im einzelnen auszulegen.

**Bezugszeichen**

| | | | |
|---|---|---|---|
| 1 | Wälzlager | α | Neigungswinkel |
| 2 | Lageraußenring | | |
| 2.1 | Vorsprung | | |
| 2.2 | Innengewinde | | |
| 3 | Lagerinnenring | | |
| 3.1 | Stellmutter | | |
| 3.1.1 | Innengewinde | | |
| 3.2 | Außengewinde | | |
| 3.3 | Ausnehmung | | |
| 4 | Lagerachse | | |
| 5 | Axialschrägnadellager | | |
| 5.1 | Lagernadel | | |
| 5.2 | Käfig | | |
| 5.3 | Drehachse | | |
| 5.4 | Laufscheibe | | |
| 6 | Axialschrägnadellager | | |
| 6.1 | Lagernadel | | |
| 6.2 | Käfig | | |
| 6.3 | Drehachse | | |
| 6.4 | Laufscheibe | | |
| 7 | Punkt | | |
| 8 | Bremseinrichtung | | |
| 9 | Bremselement | | |
| 9.1 | Ankerplatte | | |
| 9.2 | Bremsbelag | | |
| 9.3 | Führungsstift | | |
| 9.4 | Federelement | | |
| 9.5 | Bohrung | | |
| 10 | Spule | | |
| 11 | Luftspalt | | |
| 12 | Gegenfläche | | |
| 13 | Druckplatte | | |
| 13.1 | Außengewinde | | |

## Patentansprüche

1. Wälzlager (1), insbesondere Drehverbindung, welches im Wesentlichen aus einem äußeren Lagerring (2), einem inneren Lagerring (3) und einer Vielzahl zwischen den Laufringen (2, 3) auf zugehörigen Laufbahnen abrollender Wälzkörper besteht, sowie mit einer einen Reibschluss zwischen den Lagerringen (2, 3) erzeugenden Bremseinrichtung (8) ausgebildet ist, durch die ein mit einem der Lagerringe (3, 2) verbundenes und mit einem Elektromagneten in Wirkverbindung stehendes Bremselement (9) sowie durch eine mit dem anderen Lagerring (2, 3) verbundenen Gegenfläche (12) gebildet wird, wobei das Bremselement (9) mittels Federkraft gegen die Gegenfläche (12) gepresst ist und der Reibschluss zwischen den Lagerringen (2, 3) mit Hilfe eines Elektromagneten aufhebbar ist, **dadurch gekennzeichnet, dass** alle Elemente der Bremseinrichtung (8) als integrale Bestandteile des Wälzlagers (1) innerhalb der beiden Lagerringe (3, 2) angeordnet sind, wobei das Bremselement (9) eine ferromagnetische Ankerplatte (9.1) umfasst, die an einem Lagerring (3, 2) axial verschiebbar gehalten ist, wobei der Elektromagnet durch den gleichen Lagerring (3, 2) als Weicheisenkern sowie durch eine darin in einer in axialer Richtung offenen Ausnehmung (3.3) angeordneten Spule (10) gebildet ist, und wobei die Gegenfläche (12) an einer an dem anderen Lagerring (2, 3) befestigten kreisringförmigen Druckplatte (13) angeordnet ist.

2. Wälzlager (1) nach Anspruch 1, **dadurch gekennzeichnet, dass** das Bremselement (9) und der Elektromagnet vorzugsweise vom inneren, den Weicheisenkern bildenden Lagerring (3) und die Gegenfläche (12) vorzugsweise vom äußeren, mit der Druckplatte (13) verbundenen Lagerring (2) aufgenommen sind.

3. Wälzlager (1) nach Anspruch 2, **dadurch gekennzeichnet, dass** die Druckplatte (13) über ein Außengewinde (13.1) in ein zugehöriges Innengewinde (2.2) des Lagerringes (2) einschraubbar ist.

4. Wälzlager (1) nach Anspruch 2, **dadurch gekennzeichnet, dass** die Ankerplatte (9.1.) des Bremselementes (9) einen Bremsbelag (9.2) aufweist und über mehrere in Umfangsrichtung voneinander beabstandete Führungsstifte (9.3) axial verschiebbar am inneren Lagerring (3) gehalten ist.

5. Wälzlager (1) nach Anspruch 4, **dadurch gekennzeichnet, dass** die Ankerplatte (9.1) über mehrere in Umfangsrichtung voneinander beabstandete Federelemente (9.4) mit einer Vorspannung beaufschlagt ist, wobei im stromlosen Zustand der Spule (10) zwischen der Ankerplatte (9.1) und dem inneren Lagerring (3) ein Luftspalt (11) gebildet ist.

6. Wälzlager (1) nach Anspruch 2, **dadurch gekennzeichnet, dass** die Wälzkörper durch Lagernadeln (5.1, 6.1) zweier zueinander in O-Anordnung angestellter Axialschrägnadellager (5, 6) gebildet sind, wobei ein Schnittpunkt (7) ihrer verlängerten Drehachsen (5.3, 6.3) im inneren Lagerring (3) liegt.

7. Wälzlager (1) nach Anspruch 6, **dadurch gekennzeichnet, dass** die Axialschrägnadellager (5, 6) Laufbahnen tragende Laufscheiben (5.4, 6.4) aufweisen, die einem Härteprozess unterworfen sind.

8. Wälzlager (1) nach Anspruch 7, **dadurch gekennzeichnet, dass** die Laufscheiben (5.4, 6.4) und einer der Lagerringe (2, 3) aus unterschiedlichen Werkstoffen bestehen.

9. Wälzlager (1) nach Anspruch 8, **dadurch gekennzeichnet, dass** der äußere Lagerring (2) aus einem Leichtmetall oder aus einem Kunststoff gefertigt ist.

10. Wälzlager (1) nach Anspruch 6, **dadurch gekennzeichnet, dass** der innere Lagerring (3) zur Einstellung der Vorspannung zweiteilig ausgebildet ist, wobei dieser mit einer in axialer Richtung verschiebbaren Stellmutter (3.1) verbunden ist.

11. Wälzlager (1) nach Anspruch 10, **dadurch gekennzeichnet, dass** die Stellmutter (3.1) über ein Innengewinde (3.1.1) auf ein entsprechendes Außengewinde (3.2) auf den inneren Lagerring (3) aufschraubbar ist.

12. Wälzlager (1) nach einem der vorhergehenden Ansprüche, **dadurch gekennzeichnet, dass** es in einem Deckenstativ für medizinische Geräte einsetzbar ist.

## Claims

1. Rolling bearing (1), in particular rotary connection, which is composed substantially of an outer bearing ring (2), an inner bearing ring (3) and a multiplicity of rolling bodies that roll between the running rings (2, 3) on associated raceways, and which is formed with a brake device (8) that generates frictional locking between the bearing rings (2, 3), by means of which brake device there is formed a brake element (9), which is connected to one of the bearing rings (3, 2) and operatively connected to an electromagnet, and by means of a counterpart surface (12) connected to the other bearing ring (2, 3), wherein the brake element (9) is pressed against the counterpart surface (12) by means of spring force and the frictional locking between the bearing rings (2, 3) can be eliminated by means of an electromagnet, **characterized in that** all of the elements of the brake device (8) are arranged, as integral constituent parts of the rolling bearing (1), within the two bearing rings (3, 2), wherein the brake element (9) comprises a ferromagnetic armature plate (9.1) which is held in axially displaceable fashion on a bearing ring (3, 2), wherein the electromagnet is formed by the same bearing ring (3, 2), as a soft iron core, and by a coil (10) arranged therein in a recess (3.3) which is open in an axial direction, and wherein the counterpart surface (12) is arranged on a circular-ring-shaped thrust plate (13) fastened to the other bearing ring (2, 3).

2. Rolling bearing (1) according to Claim 1, **characterized in that** the brake element (9) and the electromagnet are preferably accommodated by the inner bearing ring (3), which forms the soft iron core, and the counterpart surface (12) is preferably accommodated by the outer bearing ring (2), which is connected to the thrust plate (13).

3. Rolling bearing (1) according to Claim 2, **characterized in that** the thrust plate (13) can be screwed by way of an external thread (13.1) into an associated internal thread (2.2) of the bearing ring (2).

4. Rolling bearing (1) according to Claim 2, **characterized in that** the armature plate (9.1) of the brake element (9) has a brake lining (9.2) and is held in axially displaceable fashion on the inner bearing ring (3) by means of multiple guide pins (9.3) that are spaced apart from one another in the circumferential direction.

5. Rolling bearing (1) according to Claim 4, **characterized in that** the armature plate (9.1) is acted on with a preload by means of multiple spring elements (9.4) that are spaced apart from one another in the circumferential direction, wherein, when the coil (10) is in the deenergized state, an air gap (11) is formed between the armature plate (9.1) and the inner bearing ring (3).

6. Rolling bearing (1) according to Claim 2, **characterized in that** the rolling bodies are formed by bearing needles (5.1, 6.1) of two axial angular-contact needle-roller bearings (5, 6) positioned in an 0-shaped arrangement with respect to one another, wherein a point of intersection (7) of their projected axes of rotation (5.3, 6.3) is situated in the inner bearing ring (3).

7. Rolling bearing (1) according to Claim 6, **characterized in that** the axial angular-contact needle-roller bearings (5, 6) have running discs (5.4, 6.4) which bear raceways and which have been subjected to a hardening process.

8. Rolling bearing (1) according to Claim 7, **characterized in that** the running discs (5.4, 6.4) and one of the bearing rings (2, 3) are composed of different materials.

9. Rolling bearing (1) according to Claim 8, **characterized in that** the outer bearing ring (2) is manufactured from a light metal or from a plastic.

10. Rolling bearing (1) according to Claim 6, **characterized in that**, for the purpose of setting the preload, the inner bearing ring (3) is formed in two parts, wherein said bearing ring is connected to an adjusting nut (3.1) that is displaceable in the axial direction.

11. Rolling bearing (1) according to Claim 10, **characterized in that** the adjusting nut (3.1) can be screwed by way of an internal thread (3.1.1) onto a corresponding external thread (3.2) on the inner bearing ring (3).

12. Rolling bearing (1) according to one of the preceding claims, **characterized in that** said rolling bearing can be used in a ceiling mount for medical appliances.

## Revendications

1. Palier à roulement (1), en particulier liaison pivotante, qui se compose essentiellement d'une bague de palier extérieure (2), d'une bague de palier intérieure (3) et d'une pluralité de corps de roulement roulant sur des pistes de roulement associées entre les bagues de roulement (2, 3), et comprenant un dispositif de freinage (8) produisant un engagement par friction entre les bagues de palier (2, 3), qui forme un élément de freinage (9) connecté à l'une des bagues de palier (3, 2) et en liaison fonctionnelle avec un électroaimant et qui est formé par une surface conjuguée (12) connectée à l'autre bague de palier (2, 3), l'élément de freinage (9) étant pressé au moyen d'une force de ressort contre la surface conjuguée (12) et l'engagement par friction entre les bagues de palier (2, 3) pouvant être supprimé à l'aide d'un électroaimant, **caractérisé en ce que** tous les éléments du dispositif de freinage (8) sont disposés sous forme de constituants intégraux du palier à roulement (1) à l'intérieur des deux bagues de palier (3, 2), l'élément de freinage (9) comprenant une plaque d'armature ferromagnétique (9.1) qui est retenue de manière déplaçable axialement sur une bague de palier (3, 2), l'électroaimant étant formé par la même bague de palier (3, 2) sous forme de noyau en fer doux et par une bobine (10) disposée dans celui-ci dans un évidement (3.3) ouvert dans la direction axiale, et la surface conjuguée (12) étant disposée sur une plaque de pression (13) de forme annulaire circulaire fixée à l'autre bague de palier (2, 3).

2. Palier à roulement (1) selon la revendication 1, **caractérisé en ce que** l'élément de freinage (9) et l'électroaimant sont reçus de préférence par la bague de palier intérieure (3) formant le noyau en fer doux et la surface conjuguée (12) est reçue de préférence par la bague de palier extérieure (2) connectée à la plaque de pression (13).

3. Palier à roulement (1) selon la revendication 2, **caractérisé en ce que** la plaque de pression (13) peut être vissée par le biais d'un filetage extérieur (13.1) dans un filetage intérieur associé (2.2) de la bague de palier (2).

4. Palier à roulement (1) selon la revendication 2, **caractérisé en ce que** la plaque d'armature (9.1) de l'élément de freinage (9) présente une garniture de frein (9.2) et est retenue par le biais de plusieurs goupilles de guidage (9.3) espacées les unes des autres dans la direction périphérique de manière déplaçable axialement sur la bague de palier intérieure (3).

5. Palier à roulement (1) selon la revendication 4, **caractérisé en ce que** la plaque d'armature (9.1) est sollicitée avec une précontrainte par le biais de plusieurs éléments de ressorts (9.4) espacés les uns des autres dans la direction périphérique, un entrefer (11) étant formé dans l'état non alimenté en courant de la bobine (10) entre la plaque d'armature (9.1) et la bague de palier intérieure (3).

6. Palier à roulement (1) selon la revendication 2, **caractérisé en ce que** les corps de roulement sont formés par des aiguilles de palier (5.1, 6.1) de deux paliers à aiguilles obliques axiaux (5, 6) inclinés l'un vers l'autre suivant un agencement en O, un point d'intersection (7) de leurs axes de rotation prolongés (5.3, 6.3) étant situé dans la bague de palier intérieure (3).

7. Palier à roulement (1) selon la revendication 6, **caractérisé en ce que** les paliers à aiguilles obliques axiaux (5, 6) présentent des disques de roulement (5.4, 6.4) portant les pistes de roulement, lesquels sont soumis à un processus de durcissement.

8. Palier à roulement (1) selon la revendication 7, **caractérisé en ce que** les disques de roulement (5.4, 6.4) et l'une des bagues de palier (2, 3) se composent de matériaux différents.

9. Palier à roulement (1) selon la revendication 8, **caractérisé en ce que** la bague de palier extérieure (2) est fabriquée en métal léger ou en plastique.

10. Palier à roulement (1) selon la revendication 6, **caractérisé en ce que** la bague de palier intérieure (3) est réalisée en deux parties pour ajuster la précontrainte, celle-ci étant connectée à un écrou de réglage (3.1) déplaçable dans la direction axiale.

11. Palier à roulement (1) selon la revendication 10, **caractérisé en ce que** l'écrou de réglage (3.1) peut être vissé par le biais d'un filetage intérieur (3.1.1) sur un filetage extérieur correspondant (3.2) sur la bague de palier intérieure (3).

12. Palier à roulement (1) selon l'une quelconque des revendications précédentes, **caractérisé en ce qu'**il peut être inséré dans un support plafonnier pour appareils médicaux.
